# EUROPEAN PATENT APPLICATION

(11) **EP 1 288 641 A1**
(43) Date of publication of application: **05.03.2003**
(21) Application number: 02015154.4
(22) Date of filing: 06.07.2002
(51) Int. Cl.: G01J 3/453, G01J 3/447, G02B 6/27, G02B 27/28

(54) **Polarisation interferometer**

(30) Priority: 28.08.2001 US 941113
(71) Applicant: Agilent Technologies Inc. a Delaware Corporation, Palo Alto, CA 94303 (US)
(72) Inventor: Rosenfeldt, Harald, 20251 Hamburg (DE)
(74) Representative: Barth, Daniel

(57) **Abstract**

A method and an apparatus for delaying parts of a coherent optical signal beam relative to each other, comprising: a first device (104) for splitting the beam into a first part and a second part, a second device (108) for delaying the second part relative to the first part, a third device (106) for recombining the first and the second part, a fourth device (104,106) for providing the recombined parts with different polarizations.

## Description

### BACKGROUND OF THE INVENTION

The present invention relates to an optical device, e.g. an element that can provide two different polarized optical signals delayed with respect to each other, e.g. a highly birefringent fiber, a so-called HiBi fiber. HiBi fibers are commonly used as polarization maintaining fibers. In addition, HiBi fibers do provide a delay of an optical signal traveling the fast axis of the HiBi fiber with respect to the optical signal traveling the slow axis of the HiBi fiber.

However, the delay is about 1,7ps/m, only. Therefore, to provide a delay of for example 170ps it is necessary to use 100m of the HiBi fiber which is costly and needs a lot of space.

### SUMMARY OF THE INVENTION

Therefore, it is an object of the invention to provide an improved optical device. The object is solved by the independent claims.

An advantage of the present invention is the possibility of using the invention in a lot of different devices and for different purposes.

First of all it can be used as a substitute for a HiBi fiber since it shows delays which are much longer than the above mentioned delays of HiBi fibers.

Additionally, it can be used as a polarization delay step or unit in a method or an apparatus for determining optical properties, e.g. the polarization mode dispersion (PMD), of an optical device under test (DUT), e.g. as described in a patent application of the applicant called "Determination of properties of an optical device" (internal reference no. 200 04162-04) filed with the same application date as the present invention.

The term "coherent" in this application means that the coherence length of the light beam is bigger than the difference of lengths of the different paths of the light beams to be superimposed in this invention.

According to the inventive concept a polarization delay step generates two, preferably orthogonal, polarized signals which are delayed with respect to each other. By this in the polarization delay step there are provided two polarization states that are "coded" by different propagation delays. To delay the two signals with respect to each other the first light beam is split into a first undelayed light beam and a first delayed light beam in the polarization delay step. Preferably, the two parts of the first light beam are orthogonal polarized with respect to each other so that they do not interfere when being recombined.

However, the two polarizations create interference patterns when being superimposed with another light beam. This effect is used in the aforementioned parallel patent application. However, when detecting the resulting superimposed light beam the two interference patterns can be separated in the electrical spectrum. It is therefore possible that polarization diversity receivers detect different spectral components that can be preferably separated by digital filters.

In a respective polarization delay unit to perform the polarization delay step there are preferably used two polarization beam splitters, one to split the first light beam in the first delayed and in the first undelayed light beam, and the second to recombine the first delayed and the first undelayed light beam. The two polarization beam splitters each of them having at least three ports are connected with each other by two polarization maintaining fibers. In this embodiment, one of these two fibers is longer than the other to create the aforementioned delay of one part of the split first light beam. Alternatively, the recombining polarization beam splitter can be replaced by a polarization maintaining coupler (PMC). In this embodiment, one of the polarization maintaining fibers is connected directly to the PMC whereas the other polarization maintaining fiber is rotated by 90° before being connected to the PMC.

It is clear for the skilled person that many other ways to realize the inventive concept, i.e. for splitting the first light beam, delaying one part with respect to the other part of the first light beam, and recombining them with different, preferably orthogonal, polarizations could be imagined.

In some interferometric experiments, it is necessary to have a second or reference interferometer without an optical device in its measurement arm, e.g. a Mach-Zehnder interferometer parallel to the measuring interferometer. In the second interferometer, the same coherent laser beam of the laser source can be coupled in by a beam splitter before the two interferometers. With the help of the second interferometer any errors in the detected powers of the resulting beams of the first interferometer caused by a non-linearity in the scanning velocity when scanning the frequency of the laser can be eliminated.

Instead of using a second interferometer it is possible according to the present invention to use the fourth port of the second polarization beam splitter as a reference signal, i.e. to recombine the two parts of the first light beam to couple out a signal to be used for a wavelength measurement. This can be done by connecting this port directly with a polarizer which causes interference between the two parts of the first light beam, so that an interference pattern is provided to evaluate the scanning velocity when scanning the frequency of the laser source. An advantage of the invention is that it does make the need for a reference interferometer superfluous, which reduces costs, necessary maintenance and the footprint of such an apparatus.

Other preferred embodiments are shown by the dependent claims.

It is clear that the invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).
- Fig. 1: shows a schematic illustration of a first embodiment of the invention;
- Fig.2: shows a schematic illustration of a second embodiment of the invention; and
- Fig.3: shows a schematic illustration of a third embodiment of the invention.

### DETAILED DESCRIPTION OF THE INVENTION

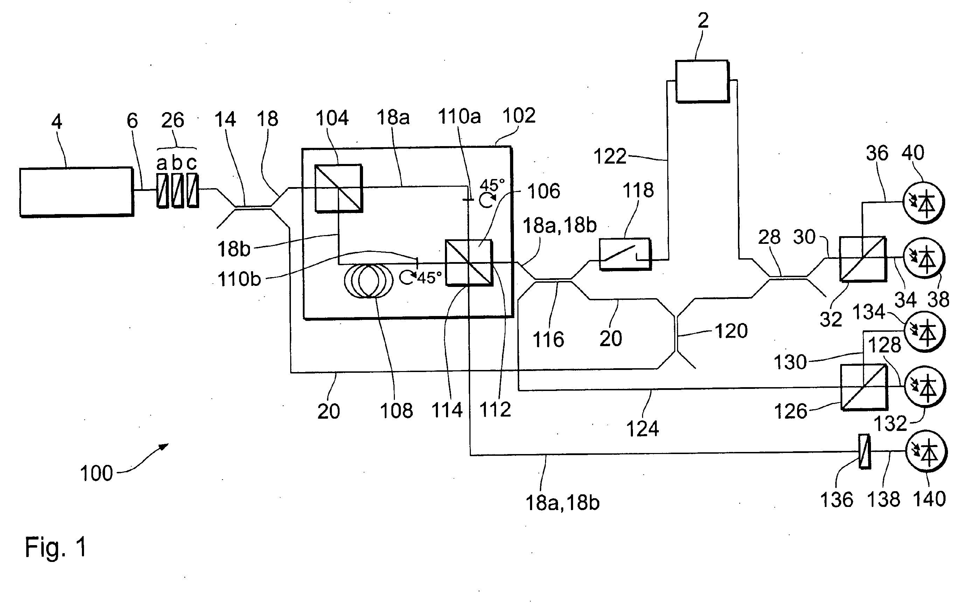

Referring now in greater detail to the drawings, Fig. 1 shows a schematic illustration of a first preferred embodiment 100 according to the present invention. It shows a polarization delay unit (PDU) 102 in the path of a laser beam 18. The PDU 102 is introduced in the path of the laser beam 18 between a beam splitter 14 and the DUT 2. The PDU 102 contains a first polarization beam splitter (PBS) 104 and a second PBS 106. The first PBS 104 splits the laser beam 18 into a first part 18a and a second part 18b. The paths of both parts 18a, 18b are provided by polarization maintaining fibers (PMF) to preserve the polarization of each part 18a,18b, respectively. Subsequently, the first part 18a and the second part 18b are reunited by the second PBS 106. It is assumed that both PBS 104, 106 are manufactured with two ports of PMF and two ports of single-mode fiber (SMF). If the PBSs 104, 106 are connected with standard-aligned connectors the light is guided completely to one port of the second PBS 106 and no light is coming out of the other port of the second PBS 106. Therefore, the PMFs of each beam 18a and 18b are rotated by 45° to produce an output on both ports of the second PBS 106.

However, the first part 18a and the second part 18b travel a different optical distance between the first PBS 104 and the second PBS 106 since beam 18b travels a longer distance symbolized by loops 108. This means that the second part 18b is delayed with respect to the first part 18a. Moreover, since both parts 18a, 18b are orthogonal to each other they do not interfere after being reunited by the second PBS 106.

The second PBS 106 has two outgoing ports 112 and 114. At both outgoing ports 112 and 114 the two parts 18a, 18b are present since they do not interfere with each other.

Instead of a reference interferometer the second port 114 of the PBS 106 can be used as a reference interferometer by detecting the outcoming light 18a, 18b through a PMF-connected polarizer 136 which makes the parts 18a and 18b interfere with each other so that there is produced a superimposed light beam 138 which shows a interference pattern which can be detected by a detector 140 connected to the polarizer 136. Therefore, the present invention provides a device that can produce delayed signals and which serves at the same time as a reference interferometer.

In embodiment 100, the input polarization of the system is critically influencing the measurement performance. Preferably, the input polarization should be chosen in a way that the light of the local oscillator path 6 is split equally onto the two parts 18a, 18b leaving the PDU 102. Therefore, the light hitting the PBS 104 has to be appropriately polarized to achieve a splitting ratio of 50%, preferably. The valid polarization states are located on a great circle on the Poincaré-sphere. Also for the PBS 32, 126 of the polarization diversity receivers a splitting ratio of 50% is preferred. Their valid input polarizations are also located on a great circle of the Poincaré-sphere. Generally, the orientation of these three circles is different. Two great circles always intersect at two points. Thus, it is always possible to choose an input polarization providing 50% power splitting at two PBS. In most cases, there is no intersection of all three circles. Therefore, a splitting ratio of 50% at all PBS 104, 32 and 126 cannot be guaranteed. It turns out that even for the worst-case condition an acceptable compromise with splitting ratios unequal to 50% can be found. The worst-case condition corresponds to a 22.5° misaligned linear polarization state of the input polarization. In this worst-case a minimum splitting ratio of sin² (25.5°) = 15% after each PBS 104, 32 and 126 occurs which still leads to a well acceptable contrast of the interference patterns. The optimum input polarization of the PDU 102 has to be found during an initialization procedure.

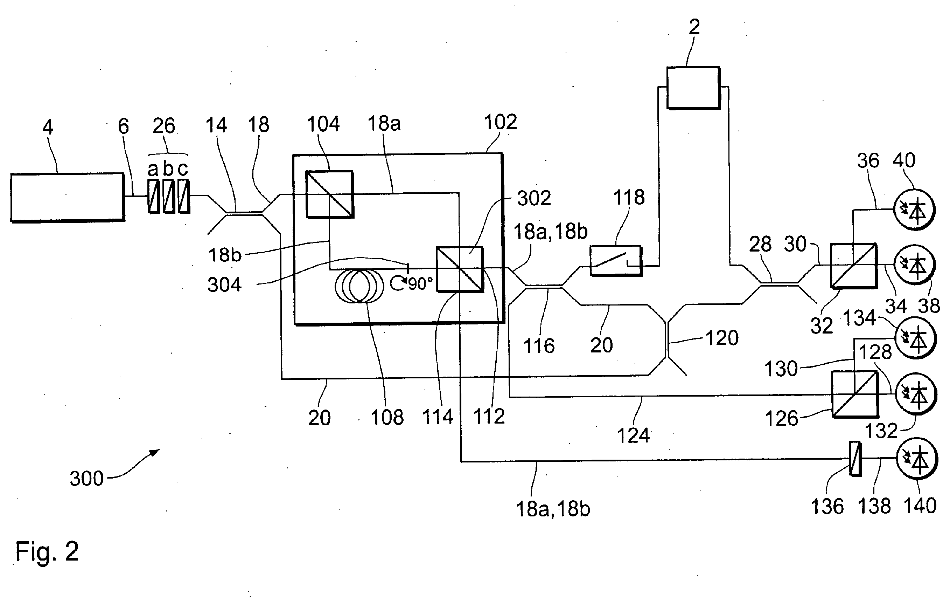

Fig. 2 shows a second embodiment 300 of the present invention.

As a difference to the embodiment 100 of Fig. 1 in the embodiment 300 of Fig. 2, the PBS 106 is replaced by a polarization maintaining coupler 302. Therefore, both output ports 112 and 114 emit the same signal. The use of the output signals of the output ports 112, 114 is the same as in embodiment 100 of Fig. 1. In the PDU 102, only the longer path 18b has to be rotated by 90° as symbolized by symbol 304 because of the use of the polarization maintaining coupler 302.

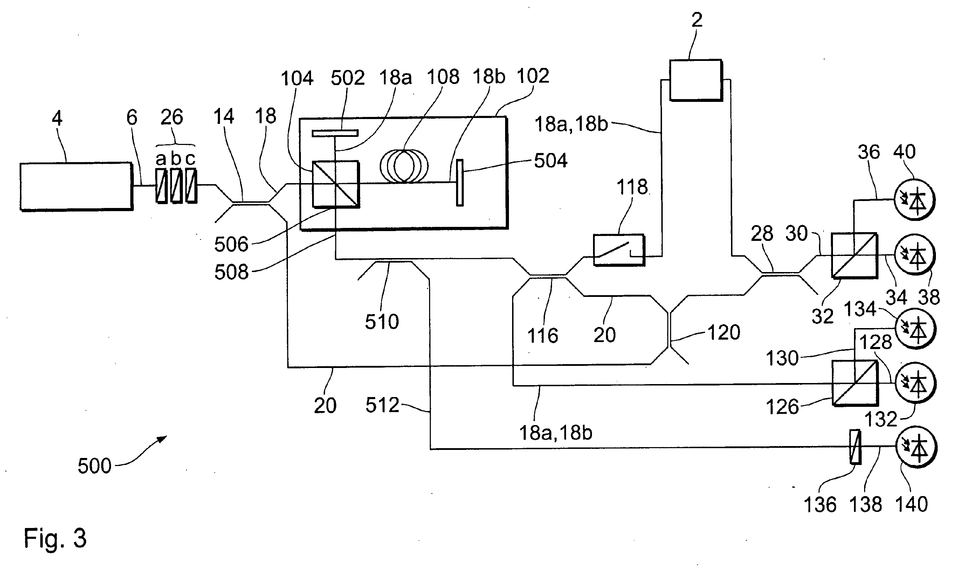

Fig. 3 shows a schematic illustration of a third embodiment 500 of the present invention. Embodiment 500 is similar to the embodiment 100 of Fig. 1. However, in embodiment 500 of Fig. 3 the PDU 102 shows a different set-up. Instead of the second PBS 106 there are provided two Faraday mirrors 502 and 504. Using the Faraday mirrors 502, 504 avoids the need of long pieces of PMF inside the PDU 102 that can cause problems if the polarization is not properly aligned to the axis of the PMF. The incoming light beam 18 is split into two linear polarization states (SOP) by the PBS 104 and travels along the SMF before it is reflected by the Faraday mirrors 502, 504, respectively. In contrast to regular mirrors the Faraday mirrors 502, 504 transform each linear incoming SOP into an orthogonal, reflected polarization state. Thus, the light is emitted through the fourth port 506 of the PBS 104 without the need of a circulator. Using the PBS 104 also to recombine the reflected light reflected by the Faraday mirrors 502, 504 guarantees that the two delayed components are orthogonally polarized and do not interfere. If the Faraday mirrors 502, 504 do not generate perfectly orthogonal polarization states a small fraction of the light is reflected back to the laser source 4 and does not disturb the signal path.

The output port 506 of the PBS 104 can be connected to a PMF 508 to provide the parts 18a, 18b.

It is possible to introduce a power detector (not shown in Fig. 3) in each path 18a, 18b in the PDU 102 of the embodiment 500 of Fig. 3 to measure if the power is distributed in each part 18a, 18b equally.

## Claims

1. A method of delaying parts of an incoming optical signal beam relative to each other, comprising the steps of:
- splitting the beam (18) into a first part (18a) and a second part (18b),
- delaying the second part (18b) relative to the first part (18a),
- recombining the first (18a) and the second part (18b),
- providing the recombined parts (18a, 18b) with different polarizations.

2. The method of claim 1,
whereby the polarizations of the parts (18a, 18b) being at least approximately orthogonal to each other.

3. The method of any one of the claims 1 or 2,
whereby each recombined part (18a, 18b) having at least approximately 50% of the power of the beam (18).

4. The method of any one of the claims 1-3, further comprising the step of:
splitting the first light beam (18, 19) in a first (18a) and a second (18b) in a polarization dependent manner.

5. An apparatus for delaying parts of an incoming optical signal beam relative to each other, comprising:
a first device for splitting the beam (18) into a first part (18a) and a second part (18b),
a second device for delaying the second part (18b) relative to the first part (18a),
a third device for recombining the first (18a) and the second part (18b),
a fourth device (104, 106, 502, 504) for providing the recombined parts (18a, 18b) with different polarizations.

6. The apparatus of claim 5,
the first device comprising a first polarization beam splitter (104) for splitting the beam (18) into a first part (18a) and a second part (18b).

7. The apparatus of any one of the claims 5 or 6,
the second device comprising a second polarization beam splitter (106) for recombining the first part (18a) and the second part (18b).

8. The apparatus of any one of the claims 5 - 7,
the third device comprising a first optical path for the first part (18a) and a second optical path for the second part (18b), the second path having a longer (108) optical length than the first path, for delaying the second part (18b) relative to the first part (18a).

9. The apparatus of claims 6 and 8,
the second device comprising a first reflector for reflecting the first part (18a) and a second reflector for reflecting the second part (18b), so that the first part (18a) and the second part (18b) can be recombined using the first polarization beam splitter (104).

10. The apparatus of claim 9,
the second device comprising a faraday mirror.

11. The apparatus of claims 9 or 10,
the fourth device (104, 106, 502, 504) comprising a device for changing the polarization of the reflected first part (18a) and for changing the polarization of the reflected second part (18b).

12. The apparatus of claim 11,
the fourth device (104, 106, 502, 504) comprising a polarization controller such as a fiber squeezer and/or a Lefèvre-loop.
